(19) Europäisches Patentamt
European Patent Office
Office européen des brevets

(11) EP 0 463 931 B1

(12) **FASCICULE DE BREVET EUROPEEN**

(45) Date de publication et mention de la délivrance du brevet:
**24.04.1996 Bulletin 1996/17**

(51) Int Cl.$^6$: **C08F 220/34**, C09K 19/38

(21) Numéro de dépôt: **91401636.5**

(22) Date de dépôt: **18.06.1991**

(54) **Copolymères amorphes, transparents dans le visible, pour applications en optique non linéaire**

Amorphe, in sichtbarem Bereich transparente Copolymere und ihre Anwendung in nichtlinearer Optik

Amorphous copolymers, translucent to visible light, for applications in non linear optics

(84) Etats contractants désignés:
**DE GB IT**

(30) Priorité: **29.06.1990 FR 9008233**

(43) Date de publication de la demande:
**02.01.1992 Bulletin 1992/01**

(73) Titulaire: **THOMSON-CSF**
**F-75008 Paris (FR)**

(72) Inventeurs:
- **Le Barny, Pierre**
  **F-92045 Paris la Défense (FR)**
- **Broussoux, Dominique**
  **F-92045 Paris la Défense (FR)**

(74) Mandataire: **Guérin, Michel et al**
**THOMSON-CSF**
**SCPI**
**B.P. 329**
**50, rue Jean-Pierre Timbaud**
**F-92402 Courbevoie Cédex (FR)**

(56) Documents cités:
**EP-A- 0 244 288**

- **MOLECULAR CRYSTALS AND LIQUID CRYSTALS, vol. 137, 1986, pages 349-364, Gordon and Breach, Science Pub., US; J.-C. DUBOIS et al.: "Liquid crystalline side chain polymers derived from poly-acrylate, poly-methacrylate and poly-alpha-chloroacrylate"**
- **Actualités GFP, bulletin n 54, p. 20 Septembre 1989. GFP ed. Strasbourg FR**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne des copolymères ayant leur maximum d'absorption situé en dessous de 350 nm et utilisables en optique non linéaire. Plus précisément, elle concerne de nouvelles familles de polymères amorphes possédant dans leurs chaînes latérales des groupements chromophores qui orientés par un champ électrique continu à une température voisine de la température de transition vitreuse donnent naissance à des effets non linéaires du second ordre, en optique. Ces effets peuvent être mis à profit dans la réalisation de composants pour optique intégrée tels qu'un doubleur de fréquence opérant avec des longueurs d'onde comprises entre 0,8 et 2 µm, ou un modulateur électrooptique agissant sur une onde électromagnétique dont la longueur d'onde peut être comprise entre 0,6 et 2 µm.

Il semble dès à présent probable que les télécommunications du futur et les nouvelles générations de systèmes de traitement de l'information utiliseront, dans une large mesure, des solutions "tout optique". Afin de rendre possible un tel développement, la réalisation de systèmes et de composants passifs, optiquement actifs, optoélectroniques et opto-optiques est nécessaire.

Actuellement la majorité des systèmes électrooptiques est fabriquée à partir de niobate de lithium ou de matériaux semiconducteurs.

Cependant, il est maintenant prouvé qu'un grand nombre de matériaux organiques possèdent des non linéarités en optique beaucoup plus grandes que les matériaux inorganiques.Sous l'action d'un éclairement intense la polarisation induite $\vec{P}$ peut s'écrire :

$$\vec{P} = \|\chi^{(1)}\| \vec{E} + \|\chi^{(2)}\| |E|\vec{E} + ...$$

avec $\chi(2)$ tenseur susceptibilité d'ordre 2.
$\vec{E}$ champ électromagnétique appliqué au milieu

Par ailleurs, les matériaux organiques ont des temps de réponse très courts car les effets non linéaires auxquels ils donnent naissance sont d'origine purement électronique. De plus, ils présentent un seuil de dommage optique plus élevé que les matériaux inorganiques. Enfin, il est possible de faire varier très facilement la structure chimique des composés organiques, ce qui permet d'ajuster en particulier la transparence et la valeur de l'hyperpolarisabilité β de ces molécules, ces deux paramètres variant en sens inverse.

Les matériaux non centrosymmétriques obtenus avec des molécules organiques, donnant naissance à des effets non linéaires du second ordre sont :

- des monocristaux
- des films de Langmuir-Blodgett
- des polymères.

Parmi ces trois alternatives, l'emploi des polymères semble le plus prometteur. En effet, les polymères sont relativement faciles à mettre en oeuvre, ce qui conduit à des coûts faibles. Ils peuvent être appliqués sur de grandes surfaces. De plus, ils sont compatibles avec des substrats inorganiques comme les semi-conducteurs. Cet ensemble de propriétés en fait un matériau de choix pour l'optique intégrée.

Les matériaux polymères d'abord proposés ont été des solutions solides de molécules présentant une hyperpolarisabilité β non nulle dans une matrice de polymère amorphe (K.G. Singer, J.F. Sohn et S.J. Lahama, Appl. Phys. Lett. 49, 248 (1986)), H.L. Hampsch, J. Yang, G.K. Wong et J.M. Torkelson, Macromolécules, 21, 526 (1988)), ou dans une matrice de polymère cristal liquide à chaînes latérales. Pour accroître la teneur en entité non linéaire, de nouveaux polymères dans lesquels le groupement chromophore responsable des effets non linéaires est lié directement au squelette du polymère sont apparus (brevet de la demanderesse FR 2 597 109).

Jusqu'à présent, dans le domaine des polymères pour les effets non linéaires du second ordre, un effort important a été fait pour obtenir des matériaux présentant une valeur élevée de susceptibilité $\chi^{(2)}$ce qui a conduit à choisir des structures chimiques de l'entité génératrice de second harmonique possédant une grande valeur d'hyperpolarisabilité β. Ce choix est fait aux dépens de la transparence du matériau dans le domaine des longueurs d'onde du visible et de ce fait limite l'utilisation de ces matériaux aux longueurs d'onde supérieures à 1 µm dans les doubleurs de fréquence et à 0,6 µm dans les modulateurs électrooptiques.

Selon l'art antérieur, des homopolymères dont la structure chimique est représentée à la figure 1, présentant un maximum d'absorption en dessous de 350 nm ont été synthétisés (Eur. Polym. J. 18 651 (1982)). Ces matériaux possèdent une susceptibilité du second ordre suffisante pour envisager des applications. Cependant ces polymères ont une faible valeur de température de transition vitreuse qui favorise les problèmes de relaxation des chaînes latérales après orientation et donnent naissance à des mésophases smectiques ou nématiques qui induisent des phénomènes de diffusion de la lumière rédhibitoires dans les applications en optique guidée. De tels polymères cristaux liquides sont notamment décrits par J.C. DUBOIS et al : "Liquid crystalline side chain polymers derived from poly-acrylate,

poly-methacrylate and poly-alpha-chloroacrylate" Molecular Crystals and Liquid crystals, vol. 137, 1986, pages 349-364, Gordon and Breach, Science Pub., US.

Afin de répondre aux critères suivants :

- structure chimique du polymère ayant un maximum d'absorption inférieure à 350 nm
- $d_{33}$> 5 pm/ V (coefficient illustrant la susceptibilité d'ordre 2 ).
- température de transition vitreuse supérieure à 80°C
- films réalisés à partir de polymères de bonne tenue mécanique et de bonne qualité optique (pas de diffusion et bonne transparence pour les longueurs d'onde utilisées).

La présente invention propose un ensemble de copolymères amorphes obtenus en copolymérisant un méthacrylate d'alkyle ou un acrylate d'alkyle ou un αhalogénoacrylate d'alkyle ou un αtrifluorométhyle acrylate d'alkyle avec un monomère portant l'entité génératrice des effets non linéaires du second ordre (Figure 2). Les groupements X de l'entité chromophore ont été déterminés pour obtenir des effets non linéaires importants ; le groupement $N\text{-}C_pH_{2p+1}$ apparaît particulièrement intéressant, dans la mesure où il ne génère pas de phase cristal liquide lorsque x = 1, on peut dans ce cas envisager des applications en optique guidée à partir d'un tel homopolymère contrairement à l'art antérieur précédemment cité.

La présente invention a aussi pour objet un procédé de fabrication du copolymère dont l'entité génératrice d'effets non linéaires est le 4 (N méthacryloyloxypropyl) N méthylamino 4′ cyanobiphényle, caractérisé en ce que la synthèse d'un tel monomère est celle décrite Figure 6. Dans la quatrième étape de cette synthèse l'emploi de la 1-3 diméthyl-3, 4, 5, 6 - tétrahydro-2 (1H)- pyrimidinone (DMPU) associée à une base relativement faible, l'hydrogénocarbonate de sodium , favorise la réaction de monoalkylation aux dépens d'une dialkylation et ce avec un rendement de réaction acceptable.

L'invention sera mieux comprise et d'autres avantages apparaîtront à la lecture de la description qui va suivre donnée à titre non limitatif et grâce aux figures annexées parmi lesquelles :

- la figure 1 représente la structure moléculaire des homopolymères cités précédemment, selon l'art antérieur,
- la figure 2 représente la structure moléculaire des copolymères selon l'invention,
- la figure 3 représente la formule chimique d'un premier exemple de copolymère selon l'invention,
- la figure 4 représente la formule chimique d'un second exemple de copolymère selon l'invention,
- la figure 5 représente un schéma réactionnel de synthèse du monomère colorant du premier exemple de copolymère selon l'invention,
- la figure 6 représente un schéma réactionnel de synthèse du monomère colorant du second exemple de copolymère selon l'invention.

D'une manière générale, les copolymères selon l'invention sont obtenus de préférence par polymérisation radicalaire, utilisant l'α, α′azobisisobutyronitrile (AIBN) comme amorceur et la diméthylformamide comme solvant, à 60°C pendant vingt quatre heures. Le copolymère est précipité dans l'éthanol puis lavé à l'éther et enfin séché sous vide.

La teneur en colorant est déterminée par résonance magnétique nucléaire et par spectrométrie UV visible. On va donner ci-dessous des exemples de synthèse de formule chimique suivante :

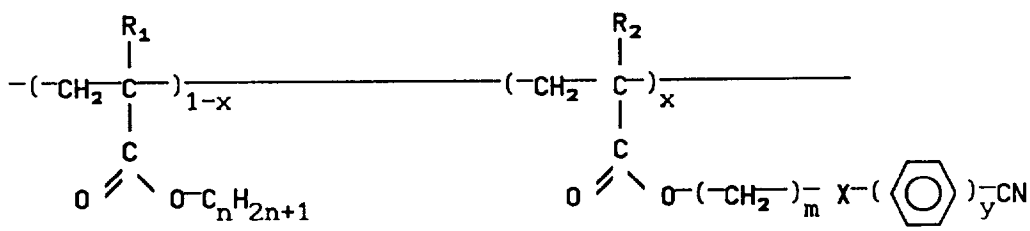

$R_1$ étant $CH_3$,H,F,Cl,$CF_3$ ou

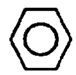

$R_2$ étant $CH_3$,H,F,Cl,$CF_3$ ou

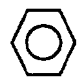

x fraction molaire dépendante de la nature du groupement X
si X est

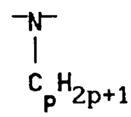

avec $1 \leq p \leq 3$ alors $0 \leq x \leq 1$
si X est 0 ou -S- alors $0 < x < 1$
$n = 1$
$2 \leq m \leq 10$
$y = 1$ ou $y = 2$

Les groupements $R_1$ et $R_2$ selon l'invention sont de préférence des méthyles.

Le groupement X est de préférence un oxygène avec $0 < x < 1$ ou un groupement $NC_pH_{2p+1}$

Le nombre de noyaux benzéniques est de préférence égal à 2 et le nombre de groupements $-CH_2-$ est de préférence égal à 3 ou égal à 6

EXEMPLE 1

Cet exemple concerne la synthèse d'un copolymère de méthacrylate de méthyle et de 4(méthacryloyloxyhexyloxy) 4' cyanobiphényle.

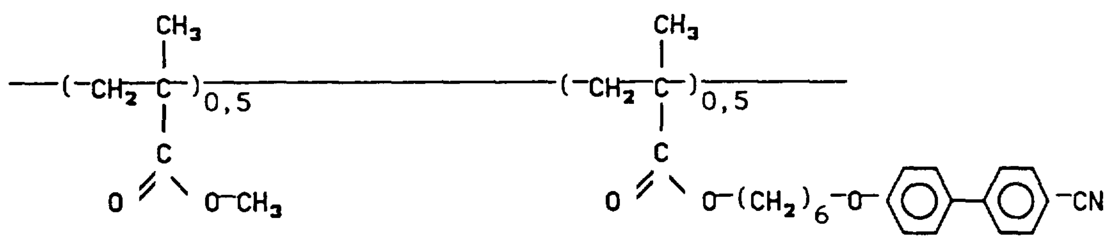

La synthèse du 4 (méthacryloyloxyhexyloxy)4′ cyanobiphényle se fait en 2 étapes à partir du 4 hydroxy 4 cyanobiphényle selon le schéma réactionnel représenté à la figure 5. Ces deux étapes sont décrites dans l'article de V.P. SHIBAEV, S.G. KOSTROMIN et N.A. PLATE paru dans Eur. Polym. J. 18 651 (1982). Le 4 hydroxy 4′ cyanobiphényle s'obtient aisément pour l'homme de l'art, à partir du 4 hydroxybiphényle (Cf par exemple J.C. DUBOIS, J.C. LAVENU and A. ZANN dans "Mesomorphic order in Polymers and polymerization in liquid crystalline media" ACS symposium series 74 A. Blumstein editor (1977) p. 86).

Ce polymère conduit facilement à la formation de film mince. Par exemple une solution dans le 1,1,2 trichloroéthane ayant une concentration de 120 g/l conduit à un film de 1,8 μm d'épaisseur par dépôt à la centrifugeuse (N = 1 000 tours $mn^{-1}$).

Le film de polymère (I) séché vous vide à 120°C est orienté sous l'action d'un champ électrique continu. Ce champ est créé par une ionisation de l'air délivrée par une pointe métallique portée à très haute tension 4kV selon la méthode corona.

Ainsi polarisé le polymère double la fréquence d'un laser YAG opérant à 1,06 μm ; le coefficient $d_{33}$ illustrant les preformances du matériau en matière de doublement de fréquence est égal à 3 $pm.V^{-1}$

EXEMPLE II

Cet exemple concerne la synthèse d'un copolymère de méthacrylate de méthyle et de 4 [ (Nméthacryloyloxypropyl) N méthyl amino] 4′cyanobiphényle.

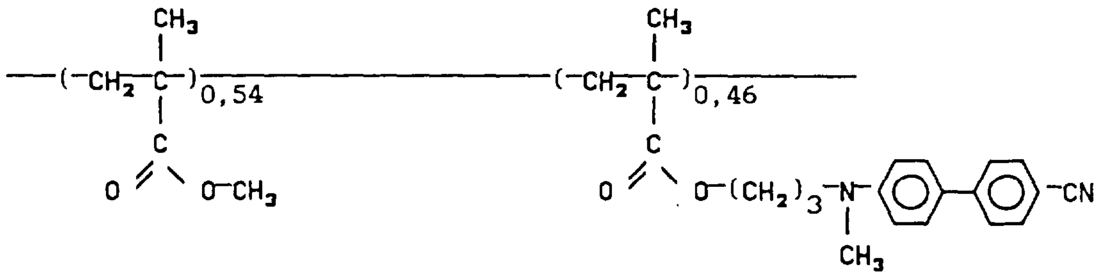

La synthèse du 4 [(Nméthacryloyloxypropyl)N méthyl amino] 4′cyanobiphényle se fait en 6 étapes à partir du 4 nitrobiphényle selon le schéma réactionnel représenté à la figure 6.

La première étape est décrite avec précision dans l'article de R.J.W. LE FEVRE et al. paru dans J. Chem. Soc pp 2041-2049 (1926).

Synthèse du 4 nitro 4′ cyanobiphényle

Dans un récipient de 250 ml, muni d'une agitation magnétique, on introduit 20 g (7,19 $10^{-2}$mole) de 4 nitro 4′bromobiphényle, 11,69 de cyanure cuivreux et 120 ml de DMF. On chauffe à reflux pendant 5 h 30. On laisse refroidir, on ajoute de l'acétone et on coule le milieu réactionnel dans 2 l d'eau contenant 20 g d'éthylène diamine. Un précipité se forme. Le solide est séparé par filtration puis lavé à l'eau et à l'hexane. Le produit brut est redissous dans le chloroforme. La phase organique est séchée sur MgSO4, filtrée et évaporée à sec. Le solide ainsi obtenu est recristallisé dans un mélange éthanol-chloroforme. On obtient 13,16 g de produit, rendement ρ = 81,7 %, point de fusion 195°C.

La troisième étape est décrite avec précision dans l'article de J. RUOLIENE et al. paru dans Mol. Cryst. Liq.Cryst. (1981) Vol. 78 pp 211-216.

. Synthèse du 4 [N (γhydroxypropyl)amino] 4′cyanobiphényle.

Dans un récipient de 250 ml muni d'une agitation magnétique, on introduit 8 g (0,041 mole) de 4 amino 4′cyanobiphényle, 6,30 g (0,045 mole) de 3 bromopropanol, 3,81 g (0,045 mole) d'hydrogénocarbonate de sodium, 80 ml de DMPU et 1 ml d'aliquat 336. On chauffe à 90°C pendant 15 heures.

Le milieu réactionnel est refroidi puis coulé dans l'eau. Un précipité apparaît ; on le sépare par filtration, puis on le lave à l'eau et à l'hexane. Le solide est dissous dans le chloroforme et l'acétone. La phase organique est séchée sur $MgSO_4$, filtrée et évaporée à sec. Le produit brut est purifié par chromotographie sur colonne de silice, suivie d'une recristallisation dans le toluène. On obtient 5,15 g de produit ; rendement 49,56 %. Il se forme parallèlement le dérivé disubstitué

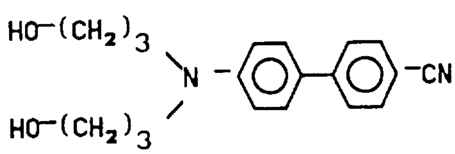

Le 4[N (γ hydroxipropyl) amino] 4′ cyanobiphényle a un point de fusion de 144°C et présente une mésophase entre 144°C et 148°C.

. Synthèse du 4 [N(hydroxypropyl) N méthyl amino] 4′ cyanobiphényle.

Le mode opératoire utilisé est identique au précédent. L'agent méthylant est l'iodure de méthyle.
Rendement 73 %

. Synthèse du 4 [Nγméthacryloyloxypropyl N méthyl amino] 4′ cyanobiphényle.

Dans un récipient de 50 ml, muni d'une agitation magnétique, on dissout 1,80 g (0,00676 mole) de 4 [N(γhydroxypropyl) N méthylamino] 4' cyanobiphényle dans 20 ml de THF sec, on ajoute 0,82 g de triéthylanamine (8,1 mmole), on refroidit le mélange réactionnel à 5°C et on ajoute goutte à goutte une solution de 0,85 g (8,1m mole) de chlorure de méthacryloyle.On laisse revenir à la température ambiante en agitant. Au bout de deux heures on ajoute 0,82 g de triéthylamine et 0,85 g de chlorure de méthacryloyle Deux heures après, on ajoute 0,41 g de triéthylamine et 0,42 g de chlorure de méthacryloyle. On continue d'agiter pendant 16 heures. On coule dans l'eau acidulée par HCL. L'ester

précipite. On filtre, lave le solide à l'eau puis à l'hexane. Le solide est dissous dans le chloroforme. La phase organique est séchée sur $MgSO_4$, filtrée et évaporée à sec. Le produit brut est purifié par chromatographie sur colonne de silice, (éluant toluène) suivie d'une recristallisation dans le cyclohexane.

Rendement 60 %

Point de fusion 89°C

$\lambda max = 349{,}9$ nm $\varepsilon = 28\,900$ mole.$l^{-1}cm^{-1}$ (solvant $CHCL_3$).

Le polymère II conduit facilement à des films minces. Par exemple, une solution à 120 g $l^{-1}$ dans le 1,1,2 trichloroéthane donne par centrifugation à 1000 tours/mn un film de 1,5 µm d'épaisseur. Les indices de ce polymère sont n = 1,59 ($\lambda$ = 1,06 µm) n = 1,6115 ($\lambda$ = 0,6328 µm). Ce film séché à 120° C sous vide génère le second harmonique d'un laser YAG ($\lambda$ = 1,06 µm).

On obtient un coefficient de non linéarité $d_{33}$ égal à 13 pm.$V^{-1}$, soit environ deux fois supérieur a coefficient $d_{33}$ généré par le niobate de lithium qui sert de référence dans le domaine. Ce coefficient déterminé expérimentalement conduit à un coefficient calculé à 0.83 µm, égal à 19 pm.$V^{-1}$.

## Revendications

1. Copolymères ou homopolymères à chaînes latérales utilisables en optique non linéaire répondant à la formule chimique suivante :

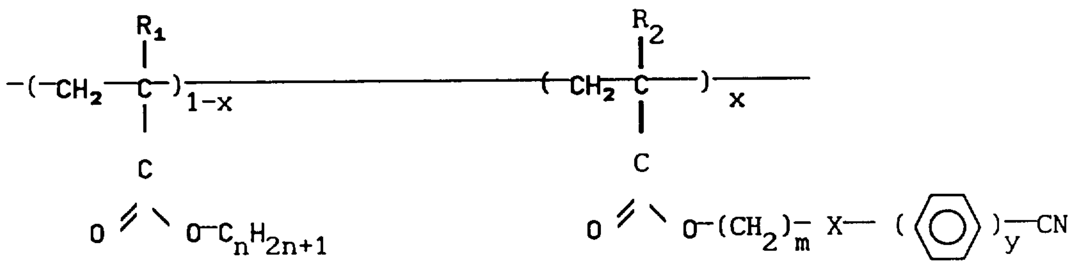

caractérisés en ce qu'ils sont obtenus par copolymérisation des monomères de formule suivante :
(1-x) moles de

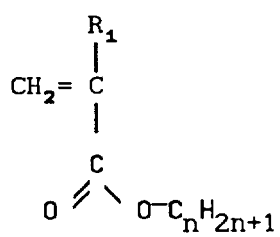

(I)

et x moles de

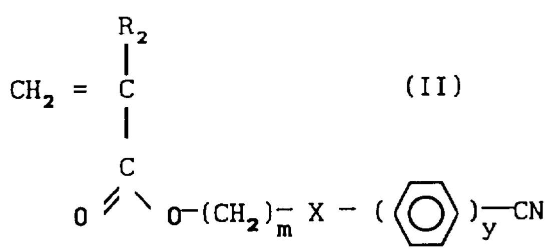

(II)

- $R_1$ étant $CH_3$, H, F, Cl, $CF_3$ ou

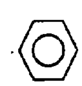

- $R_2$ étant $CH_3$, H, F, Cl, $CF_3$ ou

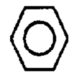

. x fraction molaire dépendante de la nature du groupement X :

Si X est

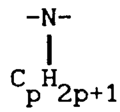

avec $1 \leq p \leq 3$, alors $0 < x \leq 1$
Si X est -O- ou -S- alors $0<x<1$
. n = 1
$2 \leq m \leq 10$
y = 1 ou y = 2.

**2.** Copolymères selon la revendication 1, caractérisés en ce $R_1=CH_3$

**3.** Copolymères selon les revendications 1 et 2,caractérisés en ce que $R_2=CH_3$

**4.** Copolymères selon les revendications 1 à 3,caractérisés en ce que m = 3 ou m = 6

**5.** Copolymères selon les revendications 1 à 4,caractérisés en ce que y = 2

**6.** Copolymères selon les revendications 1 à 5,caractérisés en ce que X = -O- avec $0< x < 1$

**7.** Copolymères selon les revendications 1 à 5,caractérisés en ce que $X = NC_pH_{2p+1}$ avec $1 \leq p \leq 3$

**8.** Copolymère selon la revendication 1 caractérisé en ce que

$R_1= CH_3$ , $R_2= CH_3$ , m = 6
X = -O- et y = 2
x = 0,5

**9.** Copolymère selon la revendication 1, caractérisé en ce que

$R_1 = CH_3$, $R_2 = CH_3$, m = 3
$X = N - C_pH_{2p+1}$ avec p = 1
y = 2
x = 0,46

**10.** Procédé de fabrication du copolymère selon la revendication 9, obtenu par copolymérisation radicalaire du méthacrylate de méthyle (monomère I) et du 4(N méthacryloyloxypropyl) N méthylamino 4' cyanobiphényle, (monomère II) caractérisé en ce que la synthèse du monomère II comprend les étapes suivantes :

1ère étape : synthèse du 4' n itro 4 bromobiphényle par bromation du 4 nitrobiphényle
2ème étape : obtention du 4'nitro 4 cyanobiphényle par action de cyanure cuivreux dans la diméthyl formamide
3ème étape : réduction du 4'nitro 4'cyanobiphényle en 4 amino 4'cyanobiphényle en présence de chlorure d'étain et d'acide chlorhydrique
4ème étape : obtention du 4 [N(γhydroxypropyl)amino] 4' cyanobiphényle par monoalkylation du 4 amino 4'cyanobiphényle avec du 3 bromopropanol et de l'hydrogenocarbonate de sodium en présence d'aliquat 336 dans la 1-3-diméthyl-3,4,5,6 - tétrahydro-2 (1H) pyrimidinone (DMPU)
5ème étape : synthèse du 4 [N(γhydroxypropyl)N méthyl amino] 4'cyanobiphényle par méthylation du 4 [N (γhydroxypropyl)amino] 4'cyanobiphényle en présence d'iodure de méthyle, d'hydrogenocarbonate de sodium et d'aliquat 336 dans le DMPU

6ème étape : obtention du 4 (N methacryloyloxypropyl) N methyl amino 4' cyanobiphenyle par estérification du [N(γhydroxypropyl)N méthyl amino] 4'cyanobiphényle en présence de triéthylamine et de chlorure de méthacryloyle dans le tétrahydrofuranne

**Claims**

1. Copolymers or homopolymers containing side chains, usable in nonlinear optics, corresponding to the following chemical formula:

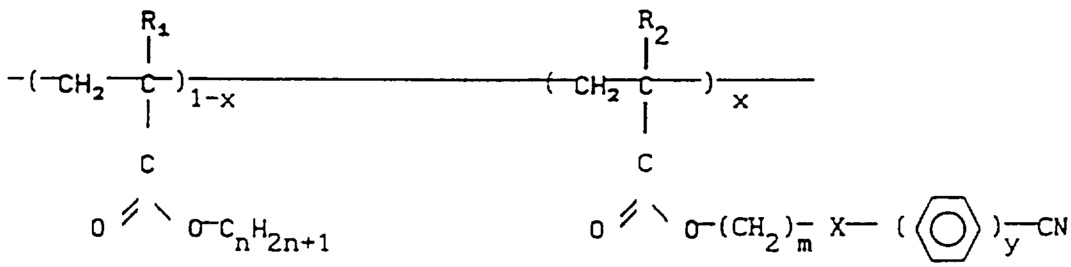

characterized in that they are obtained by copolymerization of the monomers of the following formula: (1-x) moles of

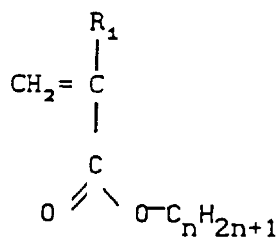

(1)

and x moles of

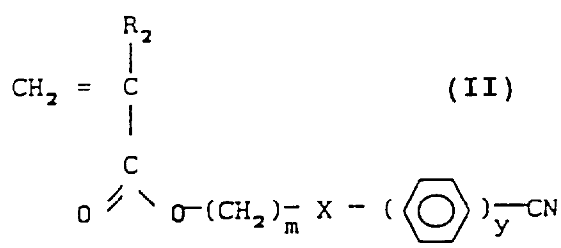

(II)

- $R_1$ being $CH_3$, H, F, Cl, $CF_3$ or

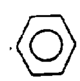

- $R_2$ being $CH_3$, H, F, Cl, $CF_3$ or

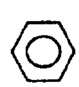

x molar fraction depending on the nature of the group X:

If X is

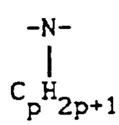

with $1 \leq p \leq 3$, then $0 < x \leq 1$

If X is -O- or -S- then $0 < x < 1$

$n = 1$

$2 \leq m \leq 10$

y = 1 or y = 2.

**2.** Copolymers according to Claim 1, characterized in that $R_1 = CH_3$.

**3.** Copolymers according to Claims 1 and 2, characterized in that $R_2 = CH_3$.

**4.** Copolymers according to Claims 1 to 3, characterized in that m = 3 or m = 6.

**5.** Copolymers according to Claims 1 to 4, characterized in that y = 2.

**6.** Copolymers according to Claims 1 to 5, characterized in that X = -O- with $0 < x < 1$.

**7.** Copolymers according to Claims 1 to 5, characterized in that $X = NC_pH_{2p+1}$ with $1 \leq p \leq 3$.

**8.** Copolymer according to Claim 1, characterized in that

$R_1 = CH_3$, $R_2 = CH_3$, m = 6
X = -O- and y = 2
x = 0.5.

**9.** Copolymer according to Claim 1, characterized in that

$R_1 = CH_3$, $R_2 = CH_3$, m = 3
$X = N - C_pH_{2p+1}$ with p = 1
y = 2
x = 0.46.

**10.** Process for the manufacture of the copolymer according to Claim 9, obtained by radical copolymerization of methyl methacrylate (monomer I) and of 4-(N-methacryloyloxypropyl)-N-methylamino-4'-cyanobiphenyl (monomer II), characterized in that the synthesis of the monomer II includes the following stages:

1st stage: synthesis of 4'-nitro-4-bromobiphenyl by bromination of 4-nitrobiphenyl,
2nd stage: obtaining 4'-nitro-4-cyanobiphenyl by the action of cuprous cyanide in dimethylformamide,
3rd stage: reduction of 4'-nitro-4-cyanobiphenyl to 4-amino-4'-cyanobiphenyl in the presence of tin chloride and of hydrochloric acid,
4th stage: obtaining 4-[N-(γ-hydroxypropyl)amino]-4'-cyanobiphenyl by monoalkylation of 4-amino-4'-cyanobiphenyl with 3-bromopropanol and sodium hydrogencarbonate in the presence of Aliquat 336 in 1,3-dimethyl-3,4,5,6-tetrahydro-2(1H)-pyrimidinone (DMPU),
5th stage: synthesis of 4-[N-(γ-hydroxypropyl)-N-methylamino]-4'-cyanobiphenyl by methylation of 4-[N-(γ-hydroxypropyl)amino]-4'-cyanobiphenyl in the presence of methyl iodide, of sodium hydrogencarbonate and of Aliquat 336 in DMPU,
6th stage: obtaining 4-(N-methacryloyloxypropyl)-N-methylamino-4'-cyanobiphenyl by esterification of 4-[N-(γ-hydroxypropyl)-N-methylamino]-4'-cyanobiphenyl in the presence of triethylamine and of methacryloyl chloride in tetrahydrofuran.

## Patentansprüche

**1.** Copolymer oder Homopolymer mit seitlichen Ketten für die nicht-lineare Optik, entsprechend der folgenden Formel:

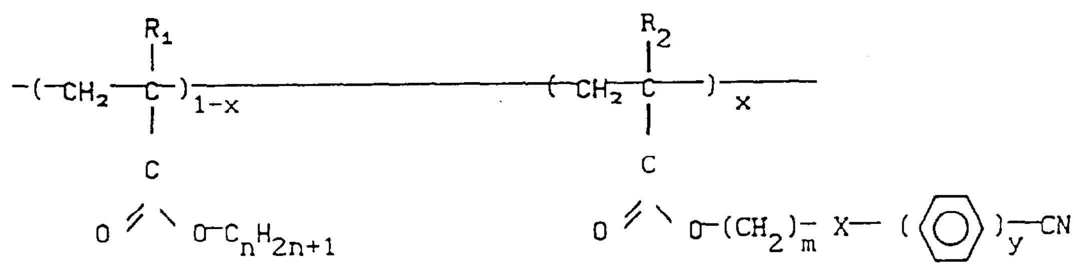

dadurch gekennzeichnet, daß es durch Copolymerisation der Monomere der folgenden Formel erhalten wird: (1-x) Mol

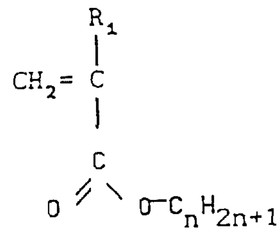

(I)

und x Mol

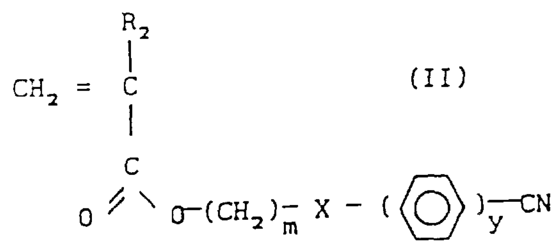

(II)

- $R_1$ ist $CH_3$, H, F, Cl, $CF_3$ oder

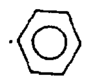

- $R_2$ ist $CH_3$, H, F, Cl, $CF_3$ oder

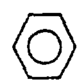

. x ist der molare Anteil abhängig von der Art der Gruppe X:
wenn X ist

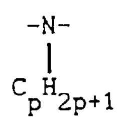

mit $1 \leq p \leq 3$, dann gilt $0 \leq x \leq 1$
wenn X ist -O- oder -S-, dann gilt $0<x<1$

. $n = 1$

$2 \leq m \leq 10$
$y = 1$ oder $y = 2$.

2. Copolymer nach Anspruch 1, dadurch gekennzeichnet, daß gilt: $R_1 = CH_3$.

3. Copolymer nach den Ansprüchen 1 und 2, dadurch gekennzeichnet, daß gilt: $R_2 = CH_3$.

4. Copolymer nach den Ansprüchen 1 bis 3, dadurch gekennzeichnet, daß gilt $m = 3$ oder $m = 6$.

5. Copolymer nach den Ansprüchen 1 bis 4, dadurch gekennzeichnet, daß gilt $y = 2$.

6. Copolymer nach den Ansprüchen 1 bis 5, dadurch gekennzeichnet, daß gilt: X = -O- mit $0 < x < 1$.

7. Copolymer nach den Ansprüchen 1 bis 5, dadurch gekennzeichnet, daß gilt: $X = N\text{-}C_pH_{2p+1}$ mit $1 \leq p \leq 3$.

**8.** Copolymer nach Anspruch 1, dadurch gekennzeichnet, daß gilt:

$R_1 = CH_3$, $R_2 = CH_3$, m = 6
X = -O- und y = 2
x = 0,5.

**9.** Copolymer nach Anspruch 1, dadurch gekennzeichnet, daß gilt:

$R_1 = CH_3$, $R_2 = CH_3$, m = 3
X = N-$C_pH_{2p+1}$ mit p = 1
y = 2
x = 0,46.

**10.** Verfahren zur Herstellung des Copolymers nach Anspruch 9 durch eine radikalartige Copolymerisierung des Methylmethacrylats (Monomer I) und des 4(N-Methacryloyloxypropyl)N-methylamin-4'-cyanobiphenyl (Monomer II), dadurch gekennzeichnet, daß die Synthese des Monomers II die folgenden Schritte aufweist:

1. Schritt: Synthese von 4'-Nitro-4-brombiphenyl durch Bromierung von 4-Nitrobiphenyl,
2. Schritt: Herstellung von 4'-Nitro-4-cyanobiphenyl durch Reaktion von Kupfercyanid in Dimethylformamid,
3. Schritt: Reduzierung von 4-Nitro-4'-cyanobiphenyl zu 4-Amino-4'-cyanobiphenyl in Gegenwart von Zinnchlorid und Chlorwasserstoffsäure,
4. Schritt: Erhalt von 4[N(γ-Hydroxypropyl)amino]4'-cyanobiphenyl durch Monoalkylierung von 4-Amino-4'-cyanobiphenyl mit 3-Bromopropanol und Natriumhydrokarbonat in Gegenwart von Aliquat 336 in 1-3-Dimethyl-3,4,5,6-tetrahydro-2(1H)pyrimidinon (DMPU),
5. Schritt: Synthese von 4[N(γ-Hydroxypropyl)N-methylamino]4'-cyanobiphenyl durch Methylierung von 4[N(γ-Hydroxypropyl)amino]4'-cyanobiphenyl in Gegenwart von Methyliodid, Natriumhydrokarbonat und Aliquat 336 in DMPU,
6. Schritt: Erhalt von 4(N-Methacryloyloxypropyl)N-methylamino-4'-cyanobiphenyl durch Veresterung des [N(γ-Hydroxypropyl)N-methylamino]4'-cyanobiphenyl in Gegenwart von Triäthylamin und Methacryloylchlorid in Tetrahydrofuran.

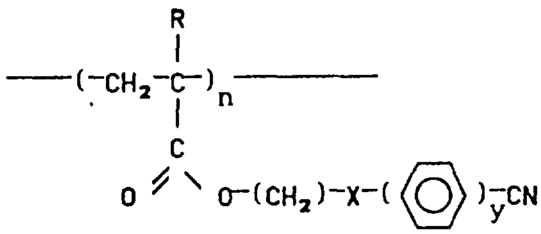

R étant H ou $CH_3$

$2 \leq m \leq 11$

X étant $-O-$ ou $-COO-$

n étant le degré de polymérisation

FIGURE I

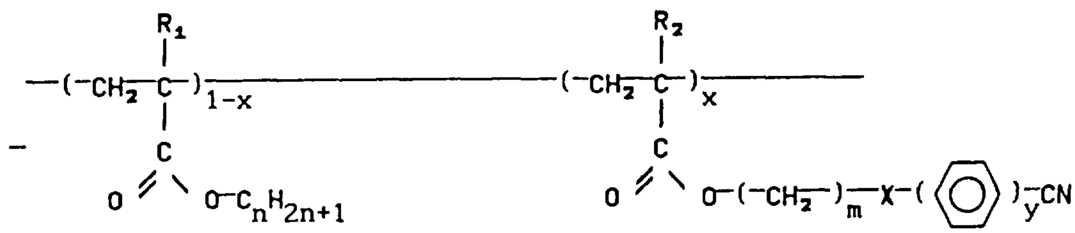

$R_1$ étant $CH_3$, H, F, Cl, $CF_3$ ou 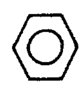

$R_2$ étant $CH_3$, H, F, Cl, $CF_3$ ou 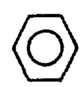

x fraction molaire dépendante de la nature du groupement X

si X est 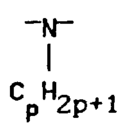 avec $1 \leq p < 3$ alors $0 < x < 1$

si X est $-O-$ ou $-S-$ alors $0 < x < 1$

$n = 1$

$m = 2 \leq m \leq 10$

$y = 1$ ou $y = 2$

FIGURE II

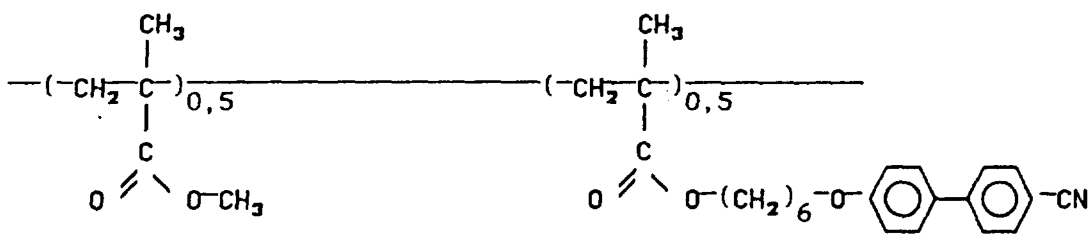

FIGURE III

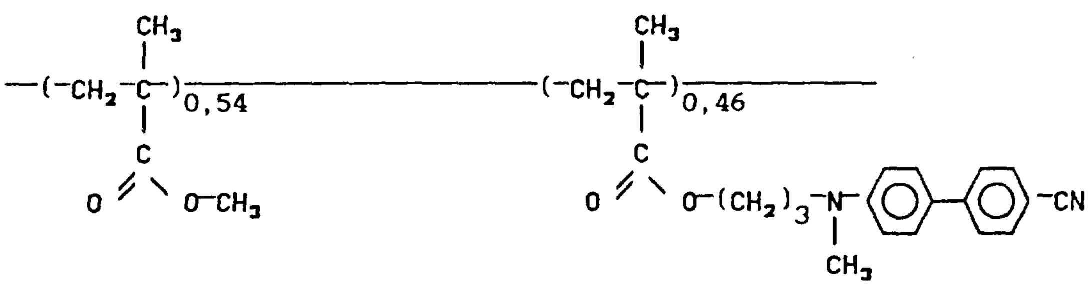

FIGURE IV

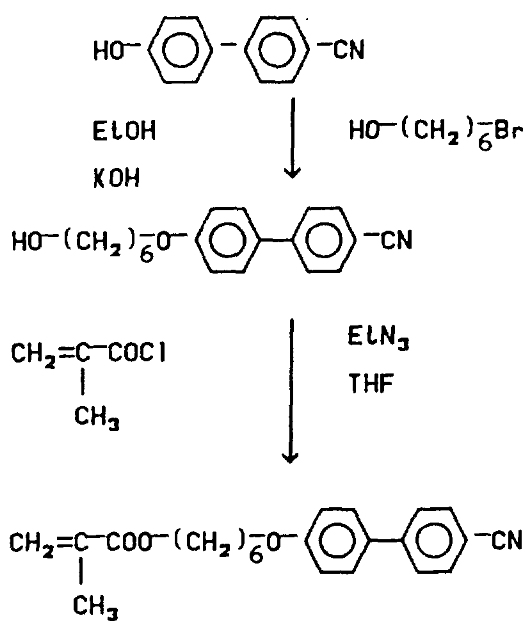


FIGURE V

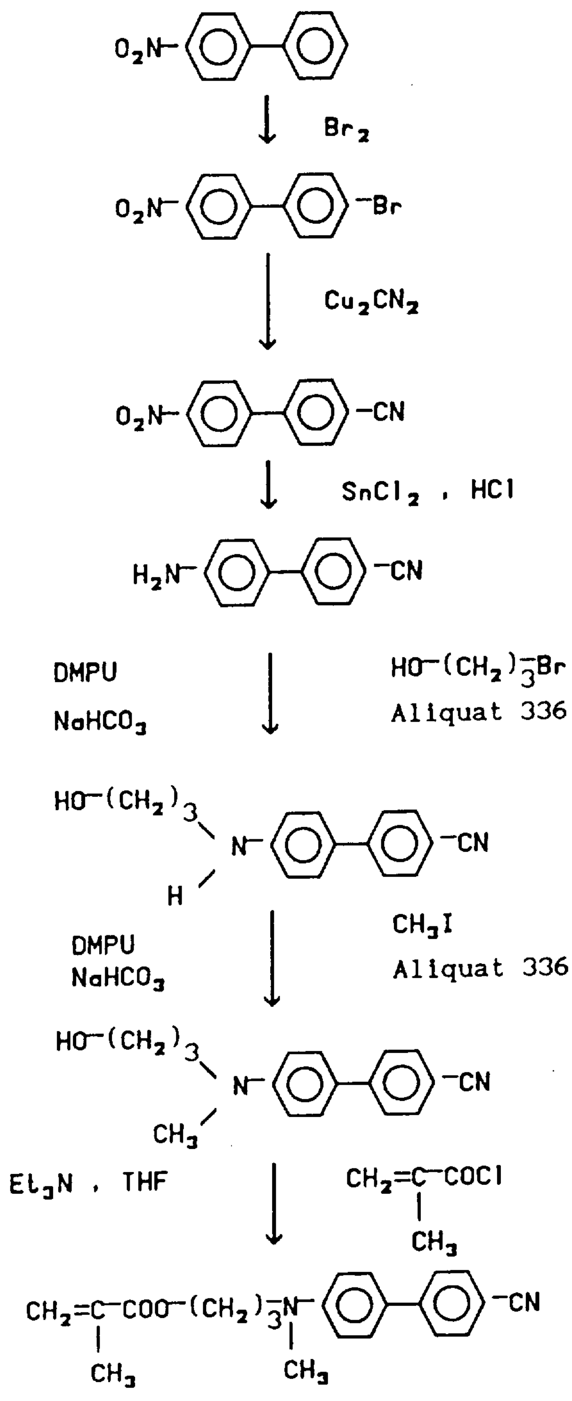
Br2
Cu2CN2
SnCl2 , HCl
DMPU
NaHCO3
HO-(CH2)3-Br
Aliquat 336
DMPU
NaHCO3
CH3I
Aliquat 336
Et3N , THF

FIGURE VI